# EUROPÄISCHE PATENTSCHRIFT

(11) **EP 1 967 394 B1**
(45) Veröffentlichungstag und Bekanntmachung des Hinweises auf die Patenterteilung: **23.12.2009**
(21) Anmeldenummer: 08003062.0
(22) Anmeldetag: 20.02.2008
(51) Int. Cl.: B60G 11/04, B60G 11/12

(54) **Federfangvorrichtung**
Spring trap device
Dispositif d'arrêt à ressort

(30) Priorität: 09.03.2007 AT 3712007
(43) Veröffentlichungstag der Anmeldung: 10.09.2008
(73) Patentinhaber: MAN Nutzfahrzeuge Österreich AG, 4400 Steyr (AT)
(72) Erfinder: Mekina, Markus, Ing., 4400 Steyr (AT); Keppel, Manfred, Dipl.-Ing., 7540 Urbersdorf (AT); Steiner, Armin, Ing., 4591 Molln 11 (AT)

(56) Entgegenhaltungen:
- EP-A- 1 500 530
- FR-A- 569 371
- GB-A- 1 202 482
- US-A- 582 492
- US-A- 1 289 140
- US-A- 1 487 427
- US-A- 1 766 924

## Beschreibung

Die Erfindung betrifft eine gefederte Aufhängung einer Starrachse am Fahrgestellrahmen eines Nutzfahrzeugs, insbesondere eines Lastwagens oder Omnibusses mit den Merkmalen der im Oberbegriff des Anspruchs 1 angegebenen Art.

Die Fahrsicherheit ist auch bei der Entwicklung von Nutzfahrzeugen ein wichtiges Thema Dabei spielt unter anderem die Auslegung der Aufhängung der Starrachsen eine große Rolle. Bei der Aufhängung der Starrachse des Nutzfahrzeugs wirken auf die dort eingesetzten Blattfedern bedeutende horizontale und vertikal Kräfte ein. Bricht eine Blattfeder, kann bei herkömmlichen Nutzfahrzeugen die Verschiebung der Starrachse in horizontaler Richtung die Folge sein.

Aus der AT 413 362 B ist eine gefederte Starrachs-Aufhängung eines Fahrzeugs bekannt, bei der der Achskörper unten an einer Blattfeder befestigt ist, die vorne an einem rahmenfesten Lagerbock und hinten an einer unteren Lagerstelle einer Schwinge angelenkt ist. Diese ist über eine obere Lagerstelle schwenkbar an einen rahmenfesten hinteren Lagerbock angelenkt. Erfindungsgemäß ist eine Federfangvorrichtung vorgesehen, die beim Bruch der Blattfeder an deren vorderen Befestigungsbereich wirksam wird. Die Federfangvorrichtung besteht aus einem am hinteren Lagerbock oberhalb und beabstandet von der oberen Lagerstelle der Schwinge angeordneten Fangbolzen und einer nach oben bis in den Bereich des Fangbolzens um einen Fangbereich verlängerten Schwinge. An besagtem Fangbereich ist in Höhe des Fangbolzens wenigstens eine Anschlagfläche vorgesehen, die beim Federbruch am Fangbolzen zur Anlage kommt, aber bei intakter Blattfeder in jedem Einfederungszustand des Rahmens in Bezug auf den Achskörper der Starrachse ein mehr oder weniger großes Maß vom Fangbolzen beabstandet bleibt.

Aus der FR 569 371 ist eine gefederte Aufhängung einer Starrachse eines Fahrzeugs bekannt, bei der die Achse durch eine Blattfeder gefedert wird. Die Blattfeder weist ein vorderes Federauge auf, das rahmenfest an einem Lagerbock befestigt ist. An ihrem hinteren Ende ist die Blattfeder mit einem Federauge direkt an der Schwinge angeordnet. Am Fahrgestell ist ein Anschlag vorgesehen, an dem sich die Schwinge im Fall des Federbruchs anlehnt. Der Anschlag fängt die Bewegung der Blattfeder auf, die in ihrem vorderen Bereich bricht. Die Bewegung der gebrochenen Schwinge soll gegenüber einem Fixpunkt am Fahrgestell eingegrenzt werden.

Die GB 1 202 482 offenbart eine Blattederanordnung für ein Kraftfahrzeug. Die Feder ist an einem Ende einer Schwinge schwenkbar an einen Lagerbock angeordnet, der am Fahrgestell befestigt ist. Ein Anschlag ist am Lagerbock vorgesehen, der die Bewegung der Schwinge begrenzt. Der Anschlag verläuft dabei quer zur Schwinge.

Die US 1,289,140 offenbart eine Federaufhängung für Fahrzeuge mit einer Kombination aus einer Achse, einer gekrümmten Blattfeder, einem Rahmen des Fahrzeugs und mehreren Lagerböcken, die am Rahmen angeordnet sind. Die Achse ruht dabei auf Rädern. Die Blattfeder weist eine U-Form auf und sitzt auf der Achse. An den Lagerböcken, die am Rahmen befestigt sind sind schwenkbare Schwingen aufgehängt und verlaufen in vertikaler Richtung zum Rahmen. Die Blattfedern sind mit ihren freien Enden schwenkbar an den Schwingen angelenkt. Weiterhin sind an den Lagerböcken Anschläge vorgesehen, die an den Enden der Blattfedern anliegen. Die Anschläge verhindern eine Längsversetzung der Lagerböcke in Bezug zu den nicht anliegenden Enden der Blattfeder.

Vor diesem Hintergrund liegt der vorliegenden Erfindung die Aufgabe zu Grunde, eine Aufhängung einer Starrachse eines Nutzfahrzeugs zu schaffen, die eine stabilere und weniger aufwendige Anschlagfläche bietet und bei der die Blattfeder im Fall des Federbruchs seitlich geführt wird um vor Beschädigung geschützt zu sein. Die Aufgabe wird erfindungsgemäß durch eine Aufhängung mit den Merkmalen des kennzeichnenden Teils des Anspruchs 1 gelöst.

Die erfindungsgemäße Aufhängung der Starrachse erfordert eine geringere Teilevielfalt, da der/die Anschläge einstückig mit dem Lagerbock herstellbar sind. Im Folgenden wird von einem Anschlag ausgegangen.

Durch Anordnung des Anschlags am Lagerbock wird der längsverschobenen Blattfeder eine höhere Widerstandskraft entgegengesetzt, da sich der Anschlag mit seinem Rücken am Lagerbock abstützt. Die Gefahr, dass der Anschlag durch die längsverschobene Blattfeder abgerissen wird, wird deutlich reduziert.

Nach einer anderen Ausführungsform der Erfindung sind am Lagerbock zwei einander entgegen gesetzte Anschläge angeordnet, von denen jeder den Schwenkbereich der Schwinge in einer der beiden einander entgegen gesetzten Schwenkrichtungen begrenzt. Die Längsverschiebung der gebrochenen Blattfeder kann auf diese Weise zur Vermeidung größerer Folgeschäden von vorne herein festgelegt werden. Eine unkontrollierte Vor- und Zurückverschiebung der gebrochenen Blattfeder wird durch Anordnung eines weiteren Anschlags unterbunden. Die Anschläge können in ihrer Stärke und Größe an die Größe und das Gewicht sowie die Ausführung der Blattfeder angepasst werden (z. B.: einblättrige oder mehrblättrige Blattfeder).

Nach einer anderen Ausführungsform der Erfindung weist der Anschlag eine Anlagefläche auf, deren Kontur mit der Kontur der Oberfläche des Federauges übereinstimmt. Hierdurch wird eine verbesserte Anlage des Federauges am Anschlag erreicht.

Nachstehend ist die Erfindung anhand mehrer in der Zeichnung dargestellter Ausführungsbeispiele näher erläutert. Hierbei zeigen:
- Fig. 1: In schematischer Darstellung die Aufhängung der Starrachse,
- Fig. 2: In schematischer Darstellung den hinteren Lagerbock bei intakter Blattfeder,
- Fig. 3: In schematischer Darstellung den hinteren Lagerbock bei Längsverschiebung der Blattfeder,
- Fig. 4: In schematischer Darstellung den Schnitt A-A aus Fig. 3 und
- Fig. 5: In schematischer Darstellung den Schnitt B-B aus Fig. 3.

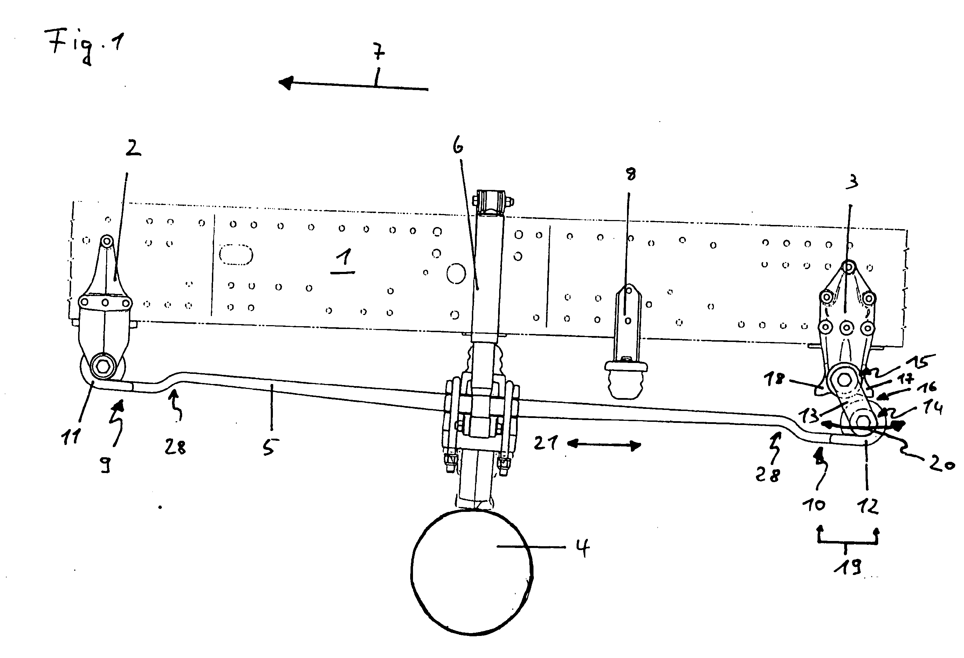

- Fig. 1: zeigt die erfindungsgemäße Aufhängung der Starrachse mit einem Fahrzeugrahmen 1, an dem je ein vorderer und hinterer weiterer Lagerbock (2 und 3) angeordnet sind.

Die Starrachse ist mit Bezugsziffer 4 dargestellt und ist an der Unterseite der Blattfeder 5 angeordnet. Zur Abfederung der Starrachse 4 dient der neben der Blattfeder 5 der Stoßdämpfer 6. Die Starrachse 4 und der Stoßdämpfer 6 sind in etwa mittig zwischen dem vorderen und hinteren Lagerbock 2 und 3 angeordnet. Aus Fahrtrichtung 7 gesehen, hinter den Stoßdämpfer 6 ist ein Federwegbegrenzer 8 angeordnet. Das vordere bzw. das hintere Ende 9 und 10 der Blattfeder 5 weisen je ein Federauge 11 und 12 auf. Die Blattfeder 5 greift mit ihrem vorderen Federauge 11 unmittelbar am rahmenfesten Lagerblock 2 an. Der Rahmen trägt die Bezugsziffer 1.

An ihrem hinteren Ende 10 ist die Blattfeder 5 mit ihrem Federauge 12 unter Zwischenschaltung einer Schwinge 13 mittelbar mit dem hinteren rahmenfesten Lagerbock 3 verbunden.

An ihrem einen, nämlich dem unteren Ende 14 ist die Schwinge 13 am hinteren Federauge 12 angelenkt. An ihrem anderen, nämlich dem oberen Ende 15 ist die Schwinge 13 am hinteren Lagerbock 3 angelenkt. Fig. 1 zeigt eine Aufhängung mit Blattfeder 5 in intaktem Zustand, die einen Abstand 16 zwischen dem hinteren Federauge 12 und einem Anschlag 17 aufweist. Der Lagerbock 3 weist im Beispiel der Fig. 1 zwei einander gegenüber liegende vordere und hintere Anschläge 18 und 17 auf. Durch den Abstand 19 der Anschläge 17 und 18 zueinander, wird der maximale Schwenkbereich 20 der Schwinge 13 bestimmt, der die Längsverschiebung 21 der Blattfeder 5 im und entgegen der Fahrtrichtung 7 beschränkt. Zur Begrenzung der Längsverschiebung 21 der Blattfeder 5 greifen die Anschlägt 17 und 18 in den Schwenkbereich 20 der Schwinge 13 ein. Die Blattfeder 5 ist in den Bereichen 28 horizontal abgestuft.

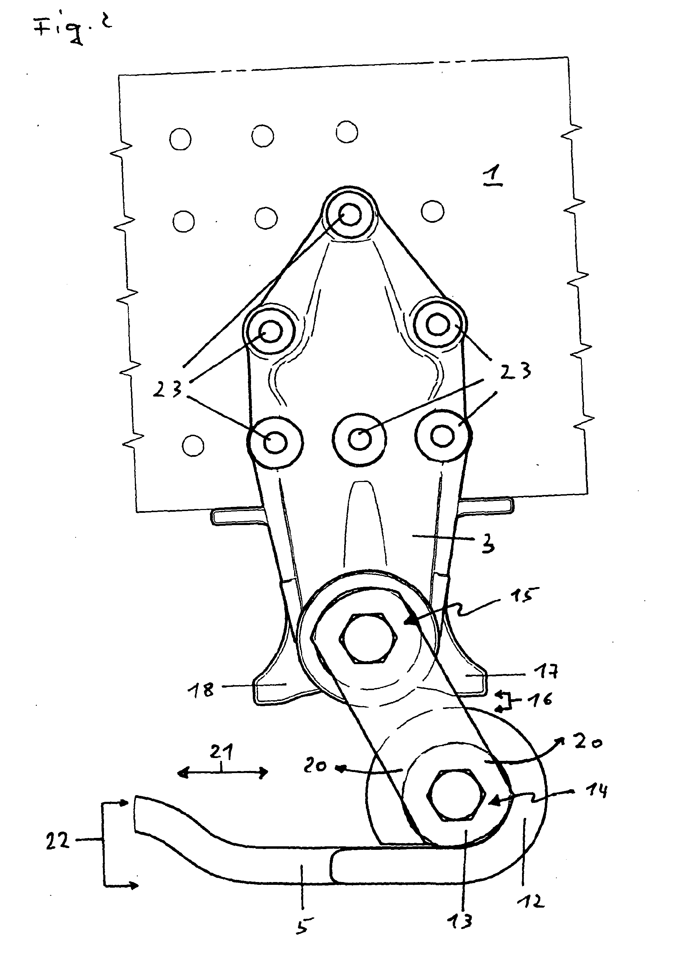

Fig. 2 zeigt in vergrößerter Darstellung den hinteren Lagerbock 3 wie in Fig. 1 dargestellt. Bei intakter Blattfeder 5 weist das hintere Federauge 12 einen Abstand 16 gegenüber dem Anschlag 17 auf. Wird der Federweg 22 der Blattfeder 5 voll ausgeschöpft, erfolgt eine Längsverschiebung 21 der Blattfeder 5, bei der jedoch ein Abstand 16 zwischen Federauge 12 und Anschlag 17 erhalten bleibt. Je nach Längsverschiebung 21 kann der Abstand 16 zwischen 5 mm und 9 mm betragen. Diese Angaben sind jedoch nur beispielhafter Natur und können auch durch andere Werte ersetzt werden. Wie in Fig. 1 weist der hintere Lagerbock 3 zwei Anschläge 17 und 18 auf, die den Schwenkbereich 20 der Schwinge 13 begrenzen. Die Lagerung der Enden 15 und 14 der Schwinge 13 erfolgt wie in Fig. 1 beschrieben am Lagerbock 3 und am Federauge 12. Die Lagerböcke 2 und 3 sind in den Fig. 1-3 mit dem Fahrzeugrahmen 1 verschraubt 23. Denkbar ist, statt der Verschraubung 23 die Verbindung, z. B. durch verschweißung herzustellen.

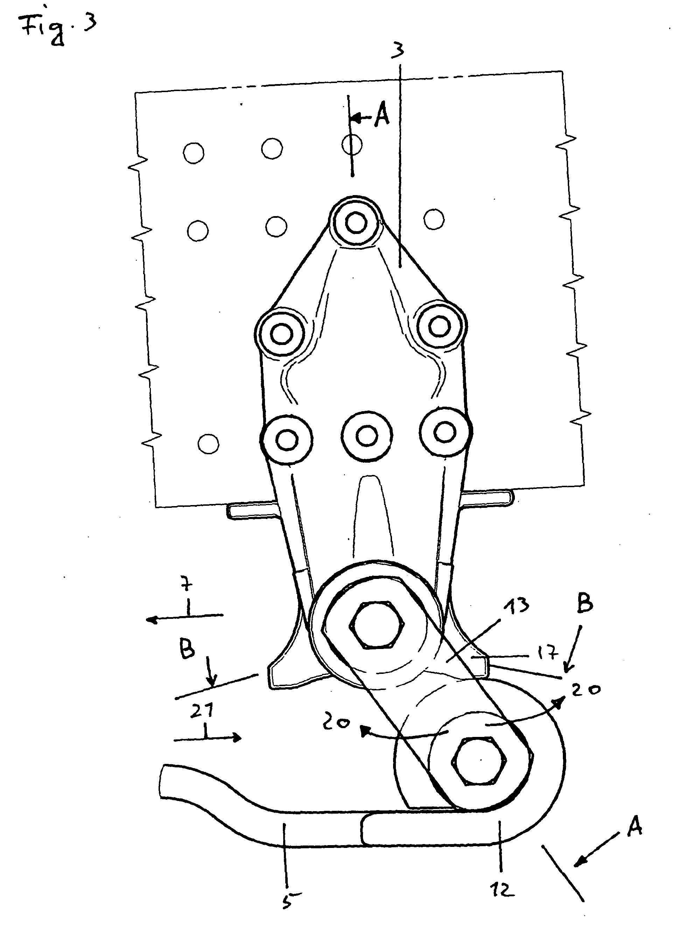

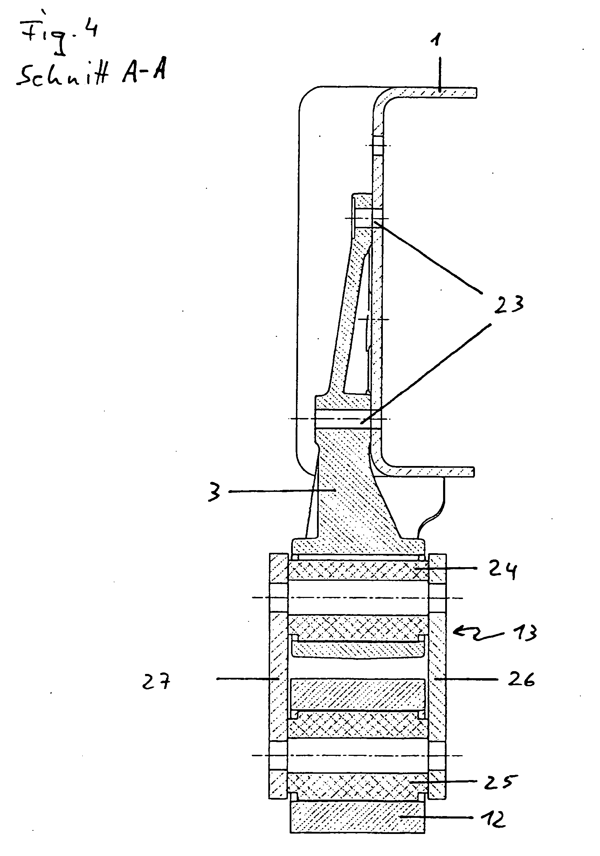

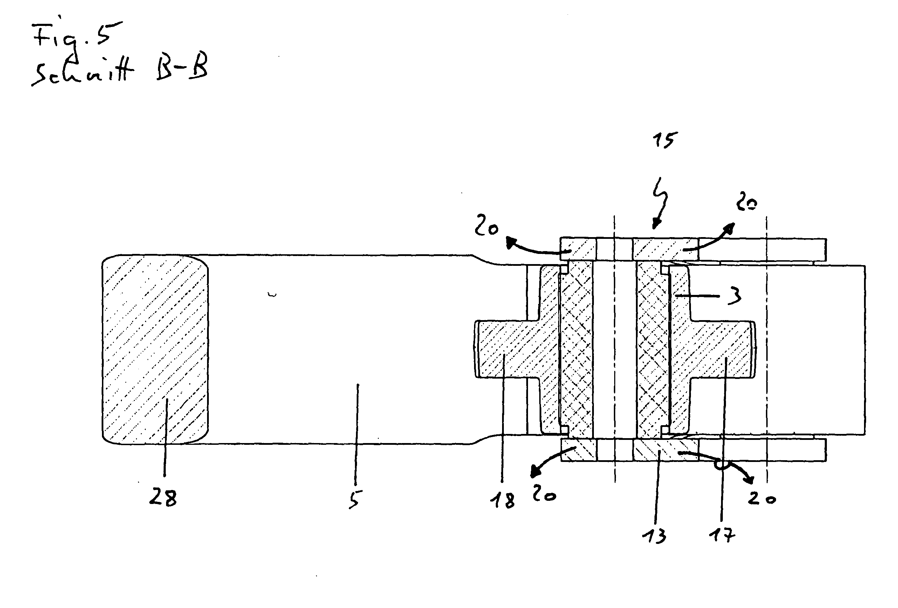

Fig. 3 zeigt den hinteren Lagerbock 3 wie in Fig. 2 mit dem Unterschied, dass von einer gebrochenen Blattfeder 5 auszugehen ist, wodurch eine Längsverschiebung 21 entgegen der Fahrtrichtung 7 erfolgt und das Federauge 12 mit dem Anschlag 17 des hinteren Lagerbocks 3 zur Anlage kommt. Der Anschlag 17 begrenzt in Fig. 3 den Schwenkbereich 20 entgegen der Fahrtrichtung 7, in dem der Anschlag 17 in den Schwenkbereich 20 der Schwinge 13 eingreift. Der Anschlag 18 begrenzt den Schwenkbereich 20 in Fahrtrichtung 7. In Fig. 3 sind die Schnittlinien A-A und B-B gezeigt, auf die sich die Fig. 4 und 5 beziehen.

Fig. 4 zeigt in schematischer Form den Schnitt entlang den Linien A-A aus der Fig. 3. Mit Bezugsziffer 1 ist dabei der Fahrzeugrahmen gezeigt, der z. B. über die Schrauben 23 fest mit dem hinteren Lagerbock 3 verbunden ist. Die Schwinge 13 weist zwei Verbindungsstege 24, 25 auf, die die beiden Schwingenseiten 26 und 27 verbinden. Über den oberen Verbindungssteg 24 ist die Schwinge 13 am Lagerbock 3 angelenkt. Die Anlenkung der Schwinge 13 am hinteren Federauge 12 erfolgt über den Verbindungssteg 25.

Fig. 5 zeigt in schematischer Form den Schnitt entlang den Linien B-B aus der Fig. 3. Mit Bezugsziffer 5 ist die Blattfeder dargestellt, die sich im Bereich der Schwinge 13 verjüngt. Die Anschläge 17 und 18 greifen in den Schwenkbereich 20 der Schwinge 13 hinein. In Fig. 5 ist das andere, nämlich das hintere Ende 15 der Schwinge 13 gezeigt, mit dem die Schwinge 13 am hinteren Lagerbock 3 angelenkt ist. Die schraffierte Fläche zeigt den Bereich 28 der Blattfeder 5, in dem die Blattfeder 5 in der Horizontalen abgestuft ist.

### Bezugsziffernliste

- 1.: Fahrzeugrahmen
- 2.: vorderer Lagerbock
- 3.: hinterer (weiterer) Lagerbock
- 4.: Starrachse
- 5.: Blattfeder
- 6.: Stoßdämpfer
- 7.: Fahrtrichtung
- 8.: Federwegbegrenzer
- 9.: vorderes Ende der Blattfeder
- 10.: hinteres Ende der Blattfeder
- 11.: Federauge (vorne)
- 12.: Federauge (hinten)
- 13.: Schwinge
- 14.: Ende der Schwinge (unten)
- 15.: Ende der Schwinge (oben)
- 16.: Abstand
- 17.: Anschlag (hinten)
- 18.: Anschlag (vorne)
- 19.: Abstand der Anschläge zueinander
- 20.: Schwenkbereich
- 21.: Längsverschiebung
- 22.: Federweg
- 23.: Schrauben
- 24.: Verbindungssteg (oben)
- 25.: Verbindungssteg (unten)
- 26.: Schwingenseite
- 27.: Schwingenseite
- 28.: Bereich

## Patentansprüche

1. Gefederte Aufhängung einer Starrachse (4) eines Nutzfahrzeugs, bei der eine Blattfeder (5) mit einem vorderen Federauge (11) fest an einem rahmenfest angeordneten Lagerbock (2) angelenkt ist und mit einem hinteren Federauge (12) an einem Ende (14) einer Schwinge (13) angeordnet ist, deren anderes Ende (15) an einem weiteren rahmenfesten Lagerbock (3) angelenkt ist, wobei wenigstens ein Anschlag (17) vorgesehen ist, der im Fall des Bruchs der Blattfeder (5) der Begrenzung der Längsverschiebung (21) der Blattfeder (5) dient, **dadurch gekennzeichnet, dass** bei Federbruch die Längsverschiebung (21) der Blattfeder (5) in und entgegen der Fahrtrichtung (7) zwischen zwei Schwingenseiten (26; 27) der Schwinge (13) verläuft und der wenigstens eine Anschlag (17) mit seinem Rücken derart am Lagerbock (3) angeordnet ist, dass er bei Federbruch an dem Federauge (12) der Blattfeder (5) zur Anlage kommt, wobei der Anschlag (17) bei Federbruch dem Eingriff in den Schwenkbereich (20) der Schwinge (13) dient.

2. Aufhängung nach Anspruch 1, **dadurch gekennzeichnet, dass** am Lagerbock (3) zwei einander entgegen gesetzte Anschläge (17, 18) angeordnet sind, von denen jeder den Schwenkbereich (20) der Schwinge (13) in einer der beiden einander entgegen gesetzten Schwenkrichtungen begrenzt.

3. Vorrichtung nach einem der vorhergehenden Ansprüche, **dadurch gekennzeichnet, dass** die Anschläge (17, 18) Anlageflächen aufweisen, deren Konturen mit der Kontur der Oberfläche des Federauges (12) übereinstimmen.

## Claims

1. Spring suspension of a rigid axle (4) of a commercial vehicle which has a leaf spring (5) with front spring eye (11) that is securely attached to a frame-fixed mount bracket (2) and a rear spring eye (12) positioned at one end (14) of a rocker (13), the other end (15) of which is hinged to another frame-fixed mount bracket (3) with at least one stop (17) installed that serves to limit the longitudinal shift (21) of the leaf spring (5) in the event that the leaf spring (5) should break. It is **characterised by** the fact that if the spring breaks, the leaf spring (5) moves longitudinally (21) in and against the direction of travel (7), between two sides (26; 27) of the rocker (13) and that it has at least one stop (17) which is positioned with its rear to the mount bracket (3) in such a way that if the spring breaks, it comes into contact with the spring eye (12) of the leaf spring (5), whereby, in the event of the spring breaking, the stop (17) serves to interfere with the swivel range (20) of the rocker (13).

2. Suspension as per claim 1, **characterised by** two stops (17, 18) positioned opposite each other on the mount bracket (3), both of which limit the swivel range (20) of the rocker (13) in each respective direction.

3. Fixture as per previous claims, **characterised by** stops (17, 18) which feature a contact surface, the contours of which are congruent with the surface contour of the spring eye (12).

## Revendications

1. Suspension par ressort d'un essieu rigide (4) d'un véhicule industriel, dans laquelle un ressort à lame(s) (5) avec un oeillet de ressort avant (11) est articulé de manière fixe à un support de fixation (2) disposé de manière fixe sur le cadre et est disposé, par le biais d'un oeillet de ressort arrière (12), à une extrémité (14) d'un bras oscillant (13) dont l'autre extrémité (15) est articulée sur un autre support de fixation (3) disposé de manière fixe sur le cadre, auquel cas au moins une butée (17) est prévue et sert à limiter le déplacement longitudinal (21) du ressort à lame(s) (5) en cas de rupture du ressort à lame(s) (5), **caractérisée en ce qu'**en cas de rupture de ressort, le déplacement longitudinal (21) du ressort à lame(s) (5) s'effectue dans le sens de la marche et dans le sens inverse de la marche (7) entre deux côtés (26 ; 27) du bras oscillant (13) et au moins une butée (17) est disposée sur le support de fixation (3) avec son envers de telle manière qu'elle vienne s'appuyer sur l'oeillet de ressort (13) du ressort à lame (5) en cas de rupture du ressort, la butée (17) servant à intervenir dans la zone de pivotement (20) du bras oscillant (13) en cas de rupture du ressort.

2. Suspension selon la revendication 1, **caractérisée en ce que** deux butées (17, 18) placées de manière opposée l'une par rapport à l'autre sont disposées sur le support de fixation (3) parmi lesquelles chacune limite la zone de pivotement (20) du bras oscillant (13) dans l'un des deux sens de pivotement opposés l'un par rapport à l'autre.

3. Dispositif selon l'une des revendications mentionnées précédemment, **caractérisé en ce que** les butées (17, 18) présentent des surfaces d'appui, dont les contours coïncident avec le contour de la surface de l'oeillet de ressort (12).
